# FASCICULE DE BREVET EUROPEEN

(11) **EP 2 795 223 B1**
(45) Date de publication et mention de la délivrance du brevet: **16.12.2015**
(21) Numéro de dépôt: 12812942.6
(22) Date de dépôt: 18.12.2012
(51) Int. Cl.: F28D 9/00, F28F 9/02, F02B 29/04

(54) **ECHANGEUR DE CHALEUR, ENSEMBLE D'UN TEL ECHANGEUR ET D'UNE OU DE BOITES COLLECTRICES, MODULE D'ADMISSION D'AIR COMPRENANT UN TEL ENSEMBLE**
WÄRMETAUSCHER, ANORDNUNG AUS EINEM SOLCHEN WÄRMETAUSCHER UND EINEM ODER MEHREREN SAMMELKÄSTEN UND LUFTEINLASSMODUL MIT EINER SOLCHEN ANORDNUNG
HEAT EXCHANGER, ASSEMBLY OF SUCH AN EXCHANGER AND OF A COLLECTOR BOX OR BOXES, AND AN AIR INTAKE MODULE COMPRISING SUCH AN ASSEMBLY

(30) Priorité: 20.12.2011 FR 1162063
(43) Date de publication de la demande: 29.10.2014
(73) Titulaire: Valeo Systemes Thermiques, 78320 Le Mesnil Saint Denis (FR)
(72) Inventeur: VALLEE, Nicolas, F-51110 Bazancourt (FR); NAUDIN, Yoann, F-08300 Saint Loup en Champagne (FR); DEHAINE, Romain, F-51100 Reims (FR); DAY, Alan, F-51100 Reims (FR)
(74) Mandataire: Metz, Gaëlle
(86) Numéro de dépôt international: PCT/EP2012/076042
(87) Numéro de publication internationale: WO 2013/092642

(56) Documents cités:
- EP-A1- 1 707 911
- EP-A2- 1 995 544
- WO-A1-2011/061311
- DE-A1-102008 018 594
- US-A1- 2004 065 433

## Description

L'invention concerne un échangeur de chaleur, notamment pour véhicule automobile, selon le préambule de la revendication 1, un ensemble d'un tel échangeur et d'une ou de boîtes collectrices ainsi qu'un module d'admission d'air comprenant un tel ensemble. Un tel échangeur est connu de EP 1 707 911 A1.

Dans ce domaine, il est connu des échangeurs, dits refroidisseurs d'air de suralimentation, permettant un échange de chaleur entre de l'air de suralimentation, destiné à alimenter le moteur du véhicule, et un liquide de refroidissement. Ils comprennent un faisceau d'échange de chaleur constitué d'un empilement de plaques déterminant entre elles des canaux de circulation alternés pour l'air de suralimentation et pour le liquide de refroidissement. De tels échangeurs présentent l'intérêt de pouvoir être disposés librement sous le capot, notamment à proximité du moteur du véhicule, contrairement aux échangeurs d'air de suralimentation refroidi à l'aide d'un faisceau d'air extérieur qui nécessitent d'être disposés en face avant du véhicule ou à tout le moins à proximité d'une arrivée d'air.

Dans de tels échangeurs, le faisceau est logé dans un carter métallique sur lequel sont rapportés des boîtes collectrices permettant de guider l'air de suralimentation en entrée et en sortie du faisceau d'échange de chaleur.

Il est en particulier connu de visser les boîtes collectrices sur le carter. Une telle solution est cependant onéreuse et complexe à mettre en oeuvre, notamment en raison des difficultés d'étanchéité qu'elle implique. On peut aussi noter que les opérations de vissage sont difficiles à réaliser lorsqu'il s'agit de fixer l'échangeur à un boîtier d'admission d'air du moteur en raison de l'environnement encombré dans lequel se trouve alors l'échangeur.

Il est également connu de souder lesdites boîtes sur ledit carter mais une telle solution s'avère finalement onéreuse et complexe à mettre en oeuvre elle aussi, notamment en raison des difficultés rencontrées pour assurer la fiabilité de la soudure. Elle limite de plus les possibilités en nécessitant l'emploi de boîtes collectrices métalliques.

On pourrait par ailleurs envisager de braser lesdites boîtes collectrices sur le carter simultanément à un brasage du reste de l'échangeur. Une telle solution facilite la fabrication mais présente également l'inconvénient de réduire la liberté de conception des boîtes collectrices qui doivent alors être configurées de façon à être conformes aux contraintes de brasage. Comme dans le cas de la soudure, les matériaux devront ainsi pouvoir résister à de hautes températures, ce qui élimine les boîtes collectrices en matériaux plastiques. En outre, contrairement aux solutions précédentes dans lesquels on peut employer des boîtes collectrices moulées présentant des formes complexes permettant de définir des nervures de renforcement ou de nombreuses interfaces telles que des brides d'accrochage et/ou des tubulures de connexion de fluide, les formes possibles sont dans ce cas réduites.

L'invention a pour objectif d'améliorer les choses et propose à cette fin un échangeur de chaleur, notamment pour véhicule automobile, comprenant un faisceau d'échange de chaleur entre un premier et un second fluide et un carter à l'intérieur duquel ledit faisceau est logé. Ledit échangeur comprend en outre un collecteur assujetti audit carter, ledit collecteur comprenant une première gorge prolongée par un bord de maintien, ledit collecteur étant configuré pour qu'un pied de boîte collectrice soit serti entre le bord de maintien et la première gorge. Le collecteur comprend, en outre, une seconde gorge permettant sa fixation au carter.

On propose ainsi, selon l'invention, une solution selon laquelle les boîtes collectrices sont serties sur le carter. On propose plus précisément pour cela d'employer une pièce rapportée, à savoir le collecteur, et un mode spécifique d'accrochage des boîtes collectrices sur l'échangeur, à savoir par fixation du collecteur au carter et par prise en sandwich de la boîte collectrice entre deux parties distinctes du collecteur.

Grâce au sertissage, l'invention permet de disposer d'une solution peu onéreuse et facile à mettre en oeuvre. Elle permet en outre l'utilisation de boîtes collectrices moulées, c'est-à-dire, de boîtes collectrices dont la forme et les matériaux pourront être librement choisis.

L'invention pourra présenter les caractéristiques complémentaires suivantes, prises ensemble ou séparément :
- ladite première gorge permet de loger un joint d'étanchéité,
- ladite première gorge et ladite seconde gorge présentent une orientation opposée,
- ledit bord de maintien comprend des dents de sertissage,
- lesdites dents de sertissage sont configurées pour être pliée sur le pied de boîte,
- ledit carter comprend des plaques,
- lesdites plaques sont insérées dans ladite seconde gorge,
- ledit faisceau comprend un empilement de plaques,
- ledit faisceau est assujetti audit carter,
- le collecteur forme un cadre et présente une ouverture de passage pour le premier fluide à l'intérieur du cadre.

L'invention concerne aussi un ensemble d'un échangeur tel que décrit plus haut et d'une boîte collectrice d'entrée et/ou d'une boîte collectrice de sortie, serties dans ledit collecteur. L'invention concerne encore un module d'admission d'air comprenant un tel ensemble.

D'autres caractéristiques et avantages de l'invention apparaîtront encore à la lecture de la description qui suit d'exemples de réalisation donnés à titre illustratif en référence aux figures annexées. Sur ces figures :
- la figure 1 est une vue en perspective illustrant un carter et un collecteur d'un échangeur de chaleur conforme à l'invention ainsi que des boîtes collectrices destinées à être montés sur ledit échangeur;
- la figure 2 est une vue en perspective illustrant un faisceau d'échange de chaleur de l'échangeur de chaleur de la figure 1 ;
- la figure 3 reprend partiellement la figure 1, cette fois en position montée, la vue étant effectuée selon un plan de coupe longitudinale.

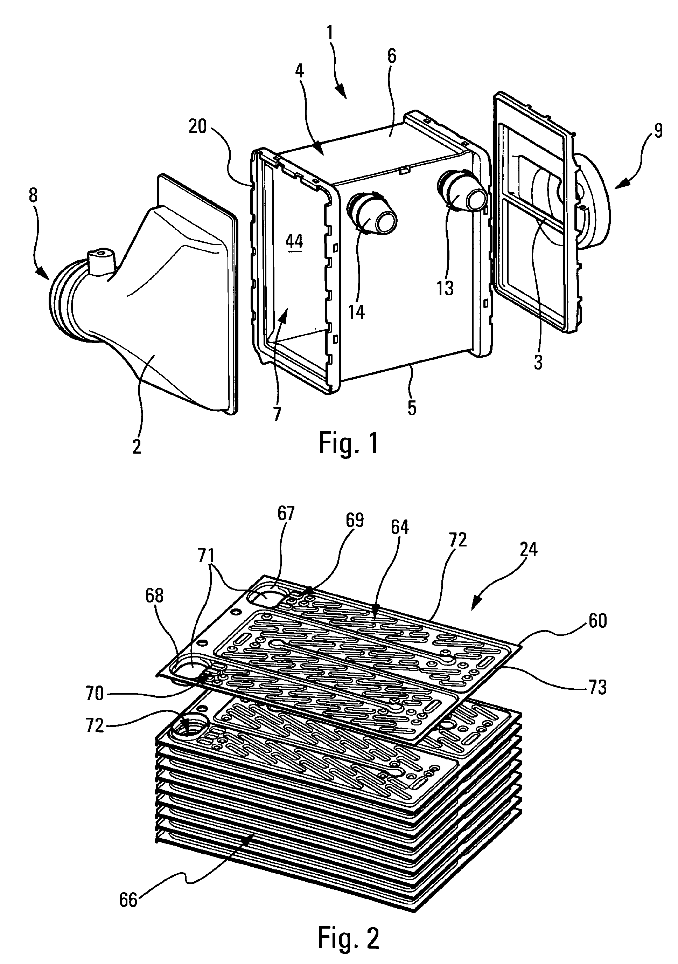

Comme illustré à la figure 1, l'invention concerne un échangeur de chaleur 1, notamment pour véhicule automobile, auquel une boîte collectrice d'entrée 2 et/ou une boîte collectrice de sortie 3, permettant la circulation d'un premier fluide à travers l'échangeur, pourront être rapportées.

Ledit échangeur 1 comprend un faisceau d'échange de chaleur entre un premier et un second fluide et un carter 4 à l'intérieur duquel un faisceau d'échange de chaleur est logé. Il est à noter que, par souci de simplification des dessins, ledit faisceau n'est pas illustré à la figure 1. Ledit premier fluide pourra être de l'air de suralimentation. Ledit second fluide pourra être un liquide de refroidissement.

Le carter 4 présente ici sensiblement la forme d'un parallélépipède rectangle. Il comprend deux parois longitudinales 5, opposées entre elles, et deux parois latérales 6, opposées entre elles, et reliant les deux parois longitudinales 5 entre elles. Le carter 4 laisse ainsi libre deux faces restantes du parallélépipède, opposées entre elles et appelées première et deuxième faces libres 7. La boîte collectrice d'entrée 2 du premier fluide est raccordée à la première face libre 7 du carter 4. Le carter 4 est raccordé à la boîte collectrice de sortie 3 au niveau de sa deuxième face libre, non-visible. Ainsi le premier fluide traverse le carter 4 de part en part depuis la boîte collectrice d'entrée 2 jusqu'à la boîte de collectrice de sortie 3.

Chacune des parois 5, 6, du carter est ici constituée d'une plaque, lesdites plaques étant assujetties les unes aux autres, notamment par brasage, pour former ledit carter 4.

L'ensemble de l'échangeur 1 et des boîtes collectrices 2, 3 forme un échangeur indépendant dans lequel la boîte d'entrée 2 et la boîte de sortie 3 sont destinées à être raccordées à des durits de circulation du premier fluide, non illustrées, par l'intermédiaire d'orifices d'entrée 8 et de sortie 9. Le premier fluide circule ainsi à travers la boîte collectrice d'entrée 2, l'échangeur 1 et la boîte collectrice de sortie 3.

Selon une variante de réalisation, non illustrée, il pourra aussi s'agir d'un module d'admission d'air dans lequel la boîte de sortie est un répartiteur d'air, configurée pour être rapportée sur une culasse de moteur de sorte à distribuer l'air vers des pipes d'admission de la culasse. Le premier fluide circule alors à travers la boîte collectrice d'entrée, l'échangeur et le répartiteur d'air.

Comme illustré à la figure 2, le faisceau 24 est formé, par exemple, d'un empilement de plaques 60 permettant la circulation du premier et d'un second fluide de façon à assurer un échange de chaleur entre lesdits fluides. Les plaques 60 sont groupées par paires et définissent chacune un circuit 64 de circulation du second fluide. De la sorte, le circuit 64 d'une plaque supérieure et d'une plaque inférieure d'une même paire de plaques se complètent pour constituer un conduit de circulation du second fluide.

Les plaques 60 ont, par exemple, la forme générale d'un rectangle allongé de dimensions juste inférieures aux dimensions des grandes faces longitudinales du carter. Les plaques 60 ont ainsi deux grands côtés 72 et deux petits côtés 73, chacune des plaques comportant deux bossages, dit premier et deuxième bossage 67, 68, ici situés le long d'un des petits côtés 73 desdites plaques 60. Le premier bossage 67 présente une entrée 69 du circuit 64 de circulation du premier fluide et le deuxième bossage 68 présente une sortie 70 du circuit 64 de circulation du second fluide. Des circuits 66 pour la circulation du premier fluide sont prévus entre deux plaques 60 en vis-à-vis de deux paires de plaques 60 adjacentes. Ils sont munis de perturbateurs, non illustrés.

Afin de permettre la communication du premier fluide entre les différentes paires de plaques et donc entre les différents circuits 64 de circulation du second fluide, les bossages 67, 68 sont ici percés d'un orifice 71 de passage du second fluide et sont en contact avec les bossages 67, 68 d'une plaque 60 adjacente pour former respectivement une volume collecteur d'entrée, non visible, et un volume collecteur de sortie 72 pour ledit second fluide. Le volume collecteur d'entrée débouche, par exemple, dans une première tubulure 13 du carter 4 et le volume collecteur de sortie débouche, par exemple, dans une seconde tubulure 14 du carter 4 (figure 1).

Autrement dit, le second fluide pénètre dans le faisceau 24 par la première tubulure 13 puis est réparti entre les plaques 60 dans les circuits 64 de circulation du second fluide par le volume collecteur d'entrée. Il s'écoule dans les circuits 64 de circulation du second fluide depuis leurs entrées 69 jusqu'à leurs sorties 70 où il pénètre dans le volume collecteur de sortie 72. Il sort alors du faisceau par la seconde tubulure 14.

Selon un tel mode de réalisation ledit faisceau 24 est assujetti audit carter 4, notamment brasé. Plus précisément, lesdites plaques 60 sont assujetties au carter 4 le long des petits côtés 73 desdites plaques 60 qui sont au contact des parois latérales 6 dudit carter 4.

Si l'on se reporte de nouveau à la figure 1, on constate que ledit échangeur 1 comprend en outre un collecteur 20, fixé audit carter 4. Comme ce dernier, ledit collecteur 20 est, par exemple, en métal, notamment aluminium et/ou alliage d'aluminium. Il pourra être brasé audit carter 4 simultanément au brasage du faisceau, notamment des différentes plaques 5, 6 qui le constituent. Ainsi, on pourra braser simultanément ledit carter 4, ledit faisceau 24 et ledit collecteur 20.

Ledit collecteur 20 présente une forme en correspondance avec une section droite du carter 4 de sorte que le collecteur 20 suit le même contour que celui dudit carter 4. Ladite forme du collecteur 20 et ladite section droite du carter 4 sont ici rectangulaires.

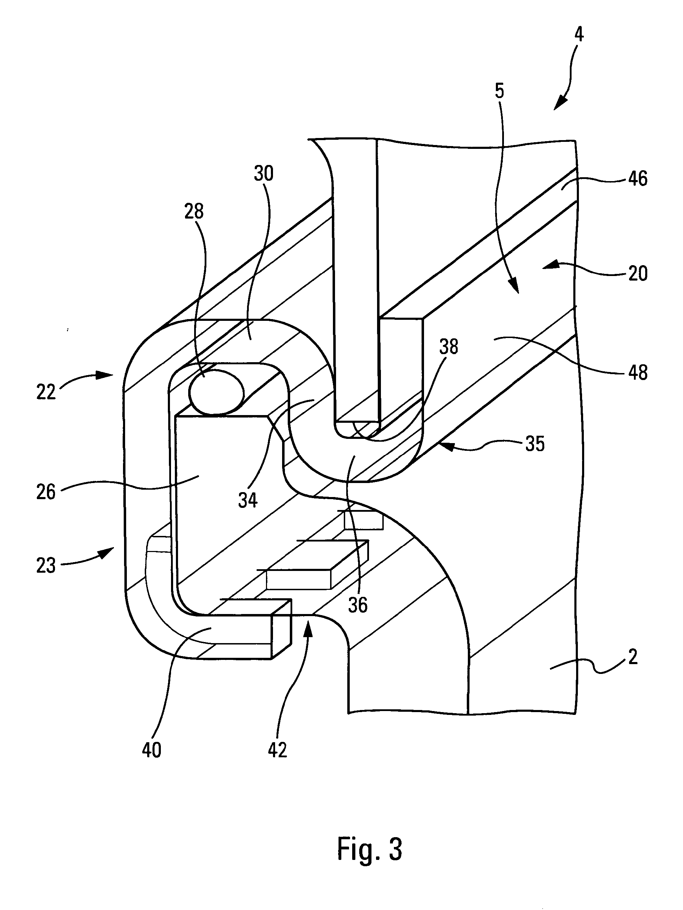

Comme illustré à la figure 3, le collecteur 20 comprend une première gorge 22, prolongée par un bord de maintien 23, notamment par continuité de matière. Ledit collecteur 20 est configuré pour qu'un pied de boîte collectrice 26 soit serti entre le bord de maintien 23 et la première gorge 22.

Grâce à l'invention, on peut ainsi fixer des boîtes collectrices d'entrée et/ou de sortie à l'échangeur 1 par une solution économique et simple à mettre à oeuvre, à savoir par sertissage. On disposera également d'une plus grande possibilité de choix de forme et de matériaux pour lesdites boîtes collectrices. Ces dernières pourront de la sorte être en matière plastique, en métal et/ou autres.

On constate par ailleurs que le sertissage permet non seulement le maintien des boîtes collectrices 2,3 sur l'échangeur 1 mais également la compression d'un joint 28 assurant l'étanchéité entre les boîtes collectrices 2, 3 et l'échangeur 1. Il s'agit, notamment, d'un joint élastomère.

Pour cela, la première gorge 22 du collecteur 20 est configurée pour accueillir ledit joint 28. Le sertissage permet alors de comprimer ledit joint 28 entre le pied de boîte 22 et un fond 30 de ladite première gorge 22.

Ledit collecteur comprend en outre une seconde gorge 32, permettant sa fixation au carter 4. Ladite première gorge 22 et ladite seconde gorge 32 présentent ici une orientation opposée, notamment parallèles aux plaques 5, 6 du carter 4 sur lesquelles elles sont fixées. Lesdites première et seconde gorges 22, 32 présentent ici une section en U, un côté 34 desdites gorges étant commun à ladite première gorge 22 et à ladite seconde gorge 32.

Lesdites plaques 5, 6 pourront être insérées dans ladite seconde gorge 22. Autrement dit, l'épaisseur desdites plaques 5, 6 est sensiblement égale à la largeur de la seconde gorge 32. Un fond 36 de cette dernière est ici en vis-à-vis d'une arrête ou tranche de matière 38 de la plaque 5 insérée dans ladite seconde gorge 32.

Ledit bord de maintien 23 pourra comprendre des dents de sertissage 40. Ces dernières sont ici configurées pour être pliée sur le pied de boîte 26, notamment au niveau d'un épaulement 42 prévu sur la boîte collectrice 2. Ledit bord de maintien 23 présente de la sorte un profil crénelé, mieux visible à la figure 1.

Ledit collecteur 20 est obtenu, par exemple, par pliage ou emboutissage d'une feuille de matière.

Dans le mode de réalisation illustré où ledit faisceau 24 comprend un empilement de plaques 60, ledit collecteur 20 forme, par exemple, un cadre et présente une ouverture 44 de passage pour le premier fluide à l'intérieur du cadre. Autrement dit, le flux de premier fluide passant à travers l'ouverture 44 alimente l'intégralité du faisceau. Ledit faisceau est alors situé à distance d'un bord 46 d'un côté 48 de le seconde gorge 32 opposé au côté 34 commun auxdites première et second gorge 22, 32.

Selon une variante de réalisation non illustrée, ledit faisceau pourra aussi être constitué de tubes de circulation du premier fluide. Ledit collecteur comprend alors une pluralité d'orifices à travers lequel lesdits tubes débouchent. Lesdits orifices sont prévus au niveau d'un médaillon formant une partie centrale du collecteur. Ledit médaillon est raccordé au côté de la seconde gorge opposée au côté commun auxdites première et second gorge.

## Revendications

1. Echangeur de chaleur, notamment pour véhicule automobile, comprenant un faisceau (24) d'échange de chaleur entre un premier et un second fluide et un carter (4) à l'intérieur duquel ledit faisceau (24) est logé, ledit échangeur comprenant en outre un collecteur (20) assujetti audit carter (4), ledit collecteur (20) comprenant une première gorge (22) prolongée par un bord de maintien (23), ledit collecteur (20) étant configuré pour qu'un pied de boîte collectrice (26) soit serti entre le bord de maintien (23) et la première gorge (22) **caractérisé en ce que** ledit collecteur (20) comprend en outre une seconde gorge (32) permettant sa fixation au carter (4).

2. Echangeur selon la revendication 1 dans lequel ladite première gorge (22) et ladite seconde gorge (32) présentent une orientation opposée.

3. Echangeur selon l'une quelconque des revendications 1 ou 2 dans lequel ledit carter (4) comprend des plaques (5,6).

4. Echangeur de chaleur selon la revendication 3 dans lequel lesdites plaques (5, 6) sont insérées dans ladite seconde gorge (32).

5. Echangeur selon l'une quelconque des revendications précédentes dans lequel ledit bord de maintien (23) comprend des dents de sertissage (40).

6. Echangeur selon la revendication 5 dans lequel lesdites dents de sertissage (40) sont configurées pour être pliées sur le pied de boîte (26).

7. Echangeur selon l'une quelconque des revendications précédentes dans lequel ledit faisceau (24) est assujetti audit carter (4).

8. Ensemble d'un échangeur (1) selon l'une quelconque des revendications précédentes et d'une boîte collectrice d'entrée (2) et/ou d'une boîte collectrice de sortie (3), serties dans ledit collecteur (20).

9. Module d'admission d'air comprenant un ensemble selon la revendication 8.

## Patentansprüche

1. Wärmetauscher, insbesondere für ein Kraftfahrzeug, der ein Wärmetauscherbündel (24) zwischen einem ersten und einem zweiten Fluid und ein Gehäuse (4) enthält, in dem das Bündel (24) untergebracht ist, wobei der Tauscher außerdem einen am Gehäuse (4) befestigten Kollektor (20) enthält, wobei der Kollektor (20) eine erste Rille (22) enthält, die von einem Halterand (23) verlängert wird, wobei der Kollektor (20) so konfiguriert ist, dass ein Fuß eines Sammelbehälters (26) zwischen den Halterand (23) und die erste Rille (22) eingepresst wird, **dadurch gekennzeichnet, dass** der Kollektor (20) außerdem eine zweite Rille (32) enthält, die seine Befestigung am Gehäuse (4) ermöglicht.

2. Tauscher nach Anspruch 1, wobei die erste Rille (22) und die zweite Rille (32) entgegengesetzt ausgerichtet sind.

3. Tauscher nach einem der Ansprüche 1 oder 2, wobei das Gehäuse (4) Platten (5, 6) enthält.

4. Tauscher nach Anspruch 3, wobei die Platten (5, 6) in die zweite Rille (32) eingefügt werden.

5. Tauscher nach einem der vorhergehenden Ansprüche, wobei der Halterand (23) Einpresszähne (40) enthält.

6. Tauscher nach Anspruch 5, wobei die Einpresszähne (40) konfiguriert sind, auf den Behälterfuß (26) umgebogen zu werden.

7. Tauscher nach einem der vorhergehenden Ansprüche, wobei das Bündel (24) am Gehäuse (4) befestigt ist.

8. Einheit aus einem Tauscher (1) nach einem der vorhergehenden Ansprüche und einem Eingangssammelbehälter (2) und/oder einem Ausgangssammelbehälter (3), die in den Kollektor (20) eingepresst sind.

9. Ansaugmodul, das eine Einheit nach Anspruch 8 enthält.

## Claims

1. Heat exchanger, notably for a motor vehicle, comprising a core bundle (24) for the exchange of heat between a first and a second fluid and a casing (4) in which the said core bundle (24) is housed, the said exchanger further comprising a collector (20) attached to the said casing (4), the said collector (20) comprising a first groove (22) extended by a retaining edge (23), the said collector (20) being configured so that a foot of a collector box (26) can be crimped between the retaining edge (23) of the first groove (22), **characterized in that** the said collector (20) further comprises a second groove (32) allowing the collector to be fixed to the casing (4).

2. Exchanger according to Claim 1, in which the said first groove (22) and the said second groove (32) are oriented in opposite directions.

3. Exchanger according to either one of Claims 1 and 2, in which the said casing (4) comprises plates (5, 6).

4. Heat exchanger according to Claim 3, in which the said plates (5, 6) are inserted in the said second groove (32).

5. Exchanger according to any one of the preceding claims, in which the said retaining edge (23) comprises crimping teeth (40).

6. Exchanger according to Claim 5, in which the said crimping teeth (40) are configured to be bent over onto the foot of the box (26).

7. Exchanger according to any one of the preceding claims, in which the said core bundle (24) is attached to the said casing (4).

8. Assembly of an exchanger (1) according to any one of the preceding claims and of an inlet collector box (2) and/or of an outlet collector box (3) which are crimped into the said collector (20).

9. Air intake module comprising an assembly according to Claim 8.
